# EUROPÄISCHE PATENTSCHRIFT

(11) **EP 0 298 575 B1**
(45) Veröffentlichungstag und Bekanntmachung des Hinweises auf die Patenterteilung: **27.10.1999**
(21) Anmeldenummer: 88201447.5
(22) Anmeldetag: 08.07.1988
(51) Int. Cl.: H04Q 7/18, H04B 1/16, G08B 3/10

(54) **Selektivrufempfänger mit Versorgungsspannungsverteiler**
Paging receiver with power supply distributor
Récepteur d'appel avec distributeur de la tension d'alimentation

(30) Priorität: 10.07.1987 DE 3722799
(43) Veröffentlichungstag der Anmeldung: 11.01.1989
(73) Patentinhaber: Koninklijke Philips Electronics N.V., 5621 BA Eindhoven (NL)
(72) Erfinder: Scheinert, Stefan, D-8501 Eckental/Brand (DE); Hillion, Hervè, NL-5672 XK Nuenen (NL)
(74) Vertreter: Peuckert, Hermann, Dipl.-Ing.

(56) Entgegenhaltungen:
- EP-A- 0 092 219
- EP-A- 0 095 750
- DE-A- 3 149 926
- DE-A- 3 226 844
- GB-A- 2 105 077
- GB-A- 2 110 858

## Beschreibung

Die Erfindung bezieht sich auf einen Selektivrufempfänger mit einem Empfangsteil zur Erzeugung von Digitaldaten aus einem empfangenen Signal, mit einem Auswerteteil zur Auswertung der Digitaldaten und einem Vergleicher zum Vergleich der Digitaldaten mit einem vorgegebenen Datenblock, sowie mit einem Versorgungsspannungsverteiler, mit dem wenigstens eine Versorgungsspannung für das Empfangsteil ein- und ausschaltbar ist.

Ein Anwendungsfall eines solchen Selektivrufempfängers ist ein Autotelefon, bei dem der Selektivrufempfänger Teil des Empfängers ist. Bei tragbaren Versionen eines Autotelefons müssen die für die Stromversorgung benötigten Batterien oder Akkumulatoren mitgeführt werden. Daher sind Maßnahmen zur Stromeinsparung, die die Nutzzeit eines Batterie- bzw. Akkusatzes verlängern, sehr wünschenswert. Im Sendebetrieb besteht ein relativ hoher Stromverbrauch, jedoch nur für die meist kurze Zeit eines Telefongesprächs. Der Stromverbrauch des Empfängers ist gegenüber dem Stromverbrauch des Senders vergleichsweise gering. Da der Empfänger des Autotelefons für eine jederzeitige Erreichbarkeit durchgehend in Betrieb sein muß, da jederzeit ein Selektivruf eintreffen kann, können sich selbst relativ kleine Stromeinsparungen im Empfänger auf den Gesamtenergieverbrauch entscheidend auswirken.

Selektivrufempfänger mit Maßnahmen zur Stromeinsparung sind zahlreich bekannt. So ist beispielsweise in GB 21 05 077 A ein Selektivrufempfänger beschrieben, bei dem zur Erkennung eines empfangenen Testmusters die Empfangsdaten in ein Schieberegister eingelesen werden. Die Ausgänge des Schieberegisters sind entweder direkt oder über Inverter auf die Eingänge eines UND-Gliedes geführt. Wird ein empfangenes Signal auf diese Weise als Testsignal erkannt, so wird auf die Stromversorgung des Selektivrufempfängers derart eingewirkt, daß keine Abschaltung erfolgt. Hierdurch wird der Selektivrufempfänger kontinuierlich mit Strom versorgt und kann dadurch besonders bequem getestet bzw. justiert werden.

Ferner ist aus GB 21 10 858 A ein Selektivrufempfänger bekannt, bei dem einer zu detektierenden Adresse ein Synchroncodewort vorangeht. Die empfangen Daten werden bitweise in ein Schieberegister eingelesen. Da das verwendete Synchroncodewort redundante Bits für einen Fehlerschutz enthält, werden die Ausgänge des Schieberegisters mit jeder erlaubten Abwandlung des Synchroncodeworts verglichen. Wird ein erlaubtes Synchroncodewort erkannt, so wird ein Steuersignal erzeugt, welches die darauf folgende Adressdecodierung veranlaßt.

Aus DE 32 26 844 A1 ist es weiterhin bekannt in einem digitalen Funkrufempfänger empfangene digitale N-Bitdatenworte mit einem entsprechenden digitalen N-Bitdatenwort zur Feststellung von irgendwelchen Unterschieden zwischen den Datenworten, die Datenworte Bit für Bit miteinander zu vergleichen.

Aus der europäischen Patentanmeldung 0 092 219 ist ein Selektivrufempfänger bekannt, welcher sich unter anderem aus einem Empfangsteil, einer Auswertelogik und einem Versorgungsspannungsverteiler zusammensetzt. Das Empfangsteil gliedert sich in zwei Empfangsbaugruppen, die unabhängig voneinander durch den Versorgungsspannungsverteiler von der Stromversorgung getrennt werden können, während die übrigen Baugruppen mit der Stromversorgung fest verbunden sind. Jeder Empfangsbaugruppe ist ein Zeitglied zugeordnet.

Die einzelnen Selektivrufempfänger sind in Gruppen organisiert, wobei für jeweils eine Gruppe ein Zeitschlitz eines Zeitmultiplex-Rahmens vorgesehen ist. Während eines Zeitschlitzes wird ein Datenblock übertragen, welcher für die Auswahl eines einzelnen Selektivrufempfängers (Selektivruf) den diesen Selektivrufempfänger zugeordneten Adresscode enthält.

Die Empfangsbaugruppen bleiben, nachdem sie den Beginn des Datenblocks empfangen haben, für eine vorgegebene feste Zeitdauer, im folgenden Einschaltzeitspanne genannt, mit der Versorgungsspannung verbunden. Nach Ablauf der Einschaltzeitspanne wird zum Zweck der Energieeinsparung die Versorgungsspannung zu den Empfangsbaugruppen für eine zweite Zeitdauer, im folgenden Ausschaltzeitspanne genannt, unterbrochen. Da für die Auswertung des Datenblocks keine Daten verloren gehen dürfen, ist bei der eingangs genannten Anmeldung die Einschaltzeitspanne so bemessen, daß sie die erst mit dem Ende des zugeordneten Datenblocks abgelaufen ist. Die Ausschaltzeispanne ist so bemessen, daß das Empfangsteil zu Beginn des nächsten zugeordneten Zeitschlitzes wieder voll funktionsfähig ist. Bei der Einstellung der Zeitglieder ist die Einschaltvezögerung der verschiedenen Empfangsbaugruppen berücksichtigt, so daß die Versorgungsspannungen der Empfangsbaugruppen zu unterschiedlichen Zeitpunkten wieder eingeschaltet werden, wobei diese Zeitpunkte, bezogen auf auf den Beginn des Zeitschlitzes, fest vorgegeben sind. Durch diese Aufteilung wird verhindert, daß sich die Wiedereinschaltzeit der Versorgungsspannung für das Empfangsteil nach der Empfangsbaugruppe mit der längsten Einschaltverzögerung richten muß.

Eine solche Schaltung läßt sich immer dann einsetzen, wenn zwischen dem Ende des Datenblocks und dem Beginn des nächstfolgenden, interessierenden Datenblocks eine feste Zeitspanne gegeben ist, welche länger sein muß als die Einschaltverzögerung der Empfangsbaugruppe mit der größten Einschaltverzögerung. Folgen Ende und Beginn der Datenblöcke jedoch in kürzeren Zeitabständen oder gar unmittelbar aufeinander, läßt sich mit der beschriebenen Schaltungsanordnung keine Energieeinsparung mehr erzielen, da die Ausschaltzeitspanne zu Null wird.

Der vorliegenden Erfindung liegt daher die Aufgabe zugrunde, eine Schaltungsanordnung der eingangs genannten Art anzugeben, bei welcher auch dann noch eine Energieeinsparung durch zeitweilige Ausschaltung von Baugruppen erzielbar ist, wenn der zeitliche Abstand zwischen dem Ende eines empfangenen Datenblocks um dem Beginn des nächsten zu empfangenden Datenblocks kürzer ist als die Einschaltverzögerung der zum Zwecke der Energieeinsparung abzuschaltenden Baugruppen.

Diese Aufgabe wird erfindungsgemäß dadurch gelöst, daß der Vergleicher auf den Versorgungsspannungsverteiler derart einwirkt; daß bei Nichtübereinstimmung der zu vergleichenden Daten ein Abschaltsignal erzeugt wird.

Durch den sofortigen Vergleich der empfangenen Daten mit den mittels des Vergleichsregisters vorgebbaren Daten wird bereits während des Empfanges eines Datenblocks vom Vergleicher eine Entscheidung darübergetroffen, ob die Daten, die bis zum Ende des Datenblocks noch empfangen werden können, für die Auswertung des gesamten Datenblocks erheblich sind. Dies bietet den Vorteil, daß in den meisten Fällen ein Datenblock nicht in seiner vollen Länge empfangen werden muß und eine Abschaltung der Empfangsbaugruppen schon vor dem Ende des Datenblocks durchgeführt werden kann.

Weitere vorteilhafte Ausgestaltungen der Erfindung sind Gegenstand der Unteransprüche.

Die Erfindung wird nun anhand des in den Figuren dargestellten Ausführungsbeispiels näher beschrieben. Es zeigen:

Fig. 1 in einem Blockschaltbild die Schaltungsanordnung eines Selektivrufempfängers.

Fig. 2 schematisch den Aufbau eines Datenblocks.

Fig. 3 eine weitere vorteilhafte Ausführungsform der Erfindung.

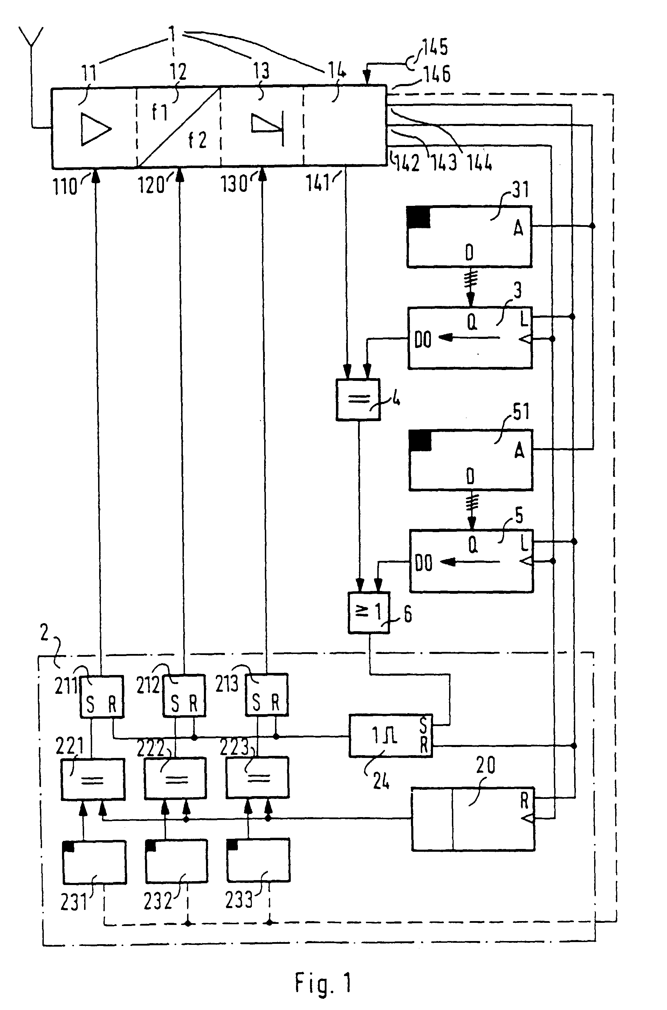

Das Empfangsteil des in Fig. 1 schematisch dargestellten Selektivrufempfängers ist Teil der Mobilstation eines Autotelefons. Es besteht aus drei Empfangsbaugruppen 11, 12 und 13. Jede Empfangsbaugruppe hat einen eigenen, von der Stromversorgung jeder anderen Baugruppe unabhängigen Anschluß 110, 120, 130 für eine Versorgungsspannung. Diese Anschlüsse sind mit den Ausgangsklemmen von Betriebsspannungsschaltern 211, 212 bzw. 213 des Versorgungsspannungsverteilers 2 verbunden. Ein an der Empfangsbaugruppe 13 angekoppeltes Auswerteteil 14 bildet aus dem empfangenen Signal, welches sich aus einem Rahmensynchronisationssignal, einem Bitsynchronisationssignal und einem Datensignal zusammensetzt, ein Synchronisationssignal, ein Taktsignal und ein digitales Datensignal. Das digitale Datensignal ist am Ausgang 141 des Auswerteteils abnehmbar.

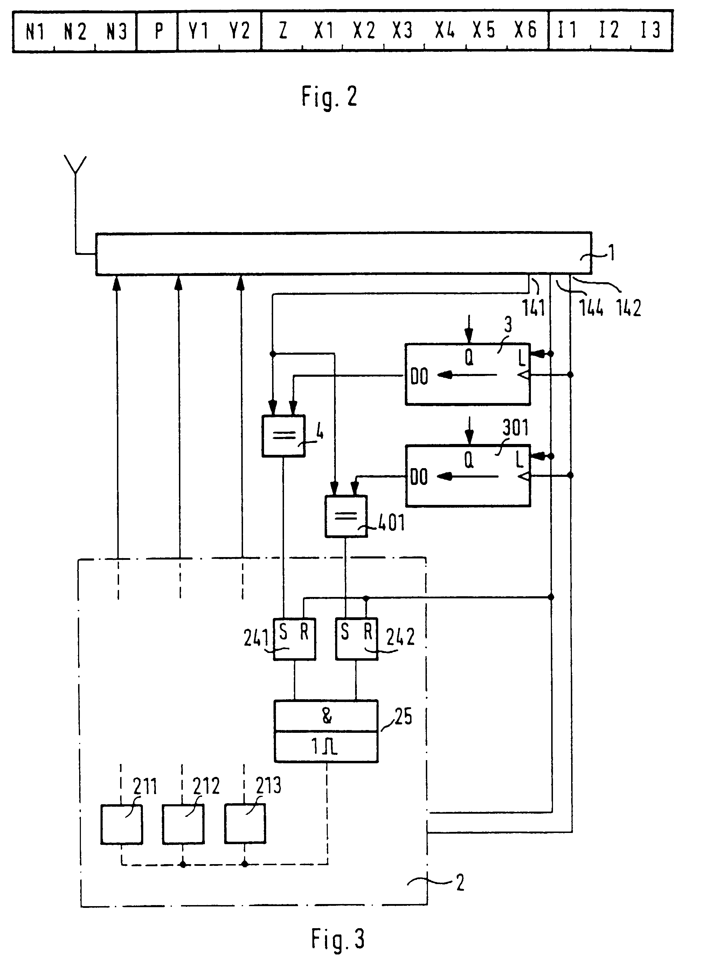

Der Aufbau eines Datenblocks dieses Digitalsignals ist in Figur 2 dargestellt. Der Datenblock enthält 64 bits. Jeweils 4 bits bilden ein Digit. Die ersten drei Digits N1, N2, N3 bilden zusammen eine Kanalnummer. Mit der im Datenblock übertragenen Kanalnummer kann der Empfänger überprüfen, ob er den richtigen Kanal empfängt. Dann folgt das Digit P, ein Operationscode, mit welchem die verschiedenen Bedeutungen des Datenblocks festgelegt sind. So kennzeichnet der Operationscode zwölf auf dem Anrufkanal einen Selektivruf des Funkleitsenders an eine Mobilstation. Die nächsten zwei Digits Y1, Y2 bilden die Funkleitbereichsnummer, welche den Funkleitbereich kennzeichnet, in dem sich der Selektivrufempfänger befindet. Die folgenden sieben Digits Z, X1, X2, X3, X4, X5, X6 bilden die Identifikationsnummer des Selektivrufempfängers, während die letzten drei Digits I1, I2, I3 dieses Datenblocks verschiedene zusätzliche Informationen enthalten können. Beim Selektivruf enthält dieser Datenblock jedoch keine weitere auszuwertende Information.

Das zum Datensignal synchrone Taktsignal steht am Ausgang 142 an. Zu Beginn eines jeden Datenblocks erzeugt das Auswerteteil 14 einen Synchronisationsimpuls, welcher am Ausgang 144 abgegeben wird. Über einen Eingang 145 können dem Auswerteteil 14 von einer in der Fig. 1 nicht dargestellten Steuerlogik Steuersignale zugeführt werden. Durch diese Steuersignale nimmt die Auswertelogik verschiedene Auswertezustände ein (z.B. Warten auf Selektivruf, Warten auf Zuweisung eines Sendekanals), welchen verschiedene Zustandssignale zugeordnet sind.

Diese Zustandssignale sind an dem Ausgang 145 und von dort an die Adresseingänge A von zwei Zustandsspeichern 31 und 51 geführt. Die Zustandsspeicher sind als Speicherbausteine ausgebildet, wobei die Datenausgänge D des ersten Zustandsspeichers 31 mit den Dateneingängen Q eines Vergleichsregisters 3 und die Datenausgänge D des zweiten Zustandsspeichers 51 mit den Dateneingängen Q eines Maskenregisters 5 verbunden sind. Das Vergleichsregister 3 und das Maskenregister 5 sind als Schieberegister mit parallelen Ladeeingängen Q ausgebildet. Die Ladesignaleingänge L dieser Register 3 und 5 sind mit dem Synchronisationsimpulsausgang 144 und die Takteingänge der Register 3 und 5 mit dem Taktausgang 142 des Auswerteteils 14 verbunden. Das Vergleichsregister 3 enthält jeweils den Datensatz, welcher mit den empfangenen Daten verglichen werden soll, während mit Hilfe der im Maskenregister 5 enthaltenen Daten einzelne Datenbits bzw. Teile des empfangenen Datenblocks vom Vergleich ausgenommen werden können.

Bei jedem Synchronisationsimpuls wird das Vergleichsregister 3 und das Maskenregister 5 parallel mit einem Datensatz geladen, welche bei jedem Taktsignal seriell ausgelesen werden. Hierbei wird durch das Zustandssignal aus den im Zustandsspeicher abgelegten Datensätzen jeweils ein dem jeweiligen Auswertezustand zugeordneter Datensatz ausgewählt.

Der Ausgang 141 des Auswerteteils ist mit dem ersten Eingang eines Vergleichers 4, welcher als Äquivalenzgatter ausgeführt ist, und der zweite Eingang des Vergleichers 4 ist mit dem Ausgang DO des Vergleichsregisters 3 verbunden. Zu jedem Bit des ausgewerteten Digitalsignals erfolgt am Ausgang 142 ein Taktimpuls, welcher die Register 3 und 5 je um ein Bit schieben läßt. Der Ausgang des Vergleichers 4 ist mit dem ersten Eingang eines Datenfilters 6, welcher als ODER-Gatter ausgebildet ist, und der zweite Eingang des Datenfilters 6 ist mit dem Ausgang DO des Maskenregisters 5 verbunden.

Im empfangsbereiten Zustand erwartet der Selektivempfänger der Mobilstation auf einem Anrufkanal einen Selektivruf. Hierzu wird das Vergleichsregister 3 mit jenen Daten, die durch das Meldungsformat eines Selektivrufs vorgegeben sind, und welche im Zustandsspeicher 31 des Vergleichsregisters gespeichert sind, geladen. Dies ist die Kanalnummer N1, N2, N3 des Anrufkanals, der Operationscode P und die eigene Teilnehmeridentifikationsnummer Z, X1, X2, X3, X4, X5, X6 der Mobilstation. Soweit die empfangenen Datenbits mit den aus dem Vergleichsregister 3 ausgelesenen Datenbits übereinstimmen, führt der Ausgang des Vergleichers 4 High-Pegel, bei Nichtübereinstimmung entsprechend Low-Pegel. Da der Funkleitbereich, in dem sich der Selektivrufempfänger befindet, für die Auswertung eines empfangenen Selektivrufs bedeutungslos ist, darf die empfangene Funkleitbereichsnummer das Vergleichsergebnis nicht beeinflussen.

Aus diesem Grund ist der Ausgang des Vergleichers 4 auch nicht unmittelbar mit dem Versorgungsspannungsverteiler 2 verbunden. Das Ausgangssignal des Vergleichers wird zunächst noch dem Eingang eines Datenfilters 6 zugeführt. Im Maskenregister 5 sind die Stellen, an welchen die Funkleitbereichsnummer im Meldungsformat steht, mit binären Einsen gekennzeichnet, während die übrigen Stellen mit binären Nullen gekennzeichnet sind.

Im Datenfilter 6 wird das Ausgangssignal des Vergleichers 4 mit dem Ausgangssignal des Maskenregisters 6 derart verknüpft, daß das Ausgangssignal des Vergleichers das Datenfilter immer dann unverändert passiert, wenn die entsprechenden Stellen des Maskenregisters mit binären Nullen versehen sind. An den Stellen, an denen im Maskenregister binäre Einsen stehen, führt der Ausgang des Datenfilters stets High-Signal, unabhängig vom tatsächlichen Ausgangssignal des Vergleichers. Auf diese Weise ist gewährleistet, daß die empfangene Funkleitbereichsnummer beliebige Werte aufweisen darf, ohne daß eine zu frühe Versorgungsspannungsabschaltung zu befürchten ist.

Der Ausgang des Datenfilters 6 ist mit dem Set-Eingang eines Abschaltimpulsgebers 24 verbunden, während der Reset-Eingang des Abschaltimpulsgebers 24 mit dem Synchronisationsimpulsausgang 143 des Auswerteteils verbunden ist. Der Ausgang des Abschaltimpulsgebers 24 ist mit den Reset-Eingängen der Betriebsspannungsschalter 211, 212 und 213 verbunden. Der Abschaltimpulsgeber ist so beschaltet, daß er bei einem Eingangssignalwechsel von High auf Low einen Impuls an seinen Ausgang abgibt, und dann bis zum nächsten Reset-Signal keine weiteren Impulse mehr abgibt.

Zu Beginn eines jeden Datenblocks wird der Abschaltimpulsgeber 24 durch den Synchronisationsimpuls zurückgesetzt. Sobald nun am Ausgang des Datenfilters 6 der Ausgangspegel von High auf Low wechselt, setzt der Ausgangsimpuls des Abschaltimpulsgebers die den einzelnen Baugruppen zugeordneten Betriebsspannungsschalter 211, 212 und 213 zurück.

Die einzelnen Betriebsspannungsschalter werden unabhängig voneinander zu bestimmten Zeitpunkten durch ein Zeitglied wieder gesetzt. Im Ausführungsbeispiel besteht dieses Zeitglied aus einem Zähler 20, drei Binärwortvergleichern 221, 222, 223 und drei Zeitwortspeichern 231, 232 und 233. Ebenfalls zu Beginn jedes Datenblocks wird der Zähler durch den Synchronisationsimpuls zurückgesetzt. Der Takteingang des Zählers ist ebenfalls mit dem Taktausgang 142 des Auswerteteils verbunden, so daß er die abgelaufenen Takte seit Beginn des Synchronisationsimpulses hochzählt. Der Ausgang des Zählers 20 ist mit den ersten Eingängen der Binärwortvergleicher 221, 222, 223 verbunden. Jeder zweite Eingang der Binärwortvergleicher ist mit den ihm jeweils zugeordneten Zeitwortspeichern 231, 232 bzw. 233 verbunden. Sobald ein Binärwortvergleicher die Übereinstimmung des an seinem zweiten Eingang anliegenden Binärwortes mit dem vom Zähler 20 gelieferten Binärwortes feststellt, setzt er über seinen Ausgang den entsprechenden Betriebsspannungsschalter 211, 212 bzw. 213 und die entsprechende Empfangsbaugruppe wird wieder mit der Betriebsspannung verbunden.

Auf diese Weise wird die Stromversorgung zu den einzelnen Baugruppen nur solange als dies unbedingt nötig ist erhalten. Das Wiedereinschalten der Stromversorgung der einzelnen Baugruppen ist auf die jeweils unterschiedlichen Einschaltverzögerungen bzw. Einschwingzeiten für die Versorgungsspannung der einzelnen Baugruppen optimiert, so daß alle Baugruppen zu Beginn des Zeitschlitzes wieder funktionsfähig sind.

In dem dargestellten Ausführungsbeispiel schalten die Betriebsspannungsschalter 211, 212 und 213 die Betriebsspannungen der einzelnen Empfangsbaugruppen an und aus. Eine Verbesserung ist durch die Anwendung von integrierten Schaltkreisen mit sogenanntem "power-down-mode" möglich. Durch ein logisches Signal wird am "power-down"-Eingang eines solchen Schaltkreises ein interner Betriebsspannungsschalter an- bzw. ausgeschaltet. Werden für den Aufbau des Empfangsteils 1 für die einzelnen Baugruppen Eingangsstufe 11, Mischer 12 und Demodulator 13 solche Schaltkreise verwendet, so wird deren Betriebsspannungsanschluß fest mit der Betriebsspannungsversorgung des Selektivrufempfängers verbunden, der Ausgang der Betriebsspannungsschalter 211, 212 bzw. 213 jedoch an die "power-down"-Eingänge der Schaltkreise gelegt. In diesem Fall muß der entsprechende Betriebsspannungsschalter nur den gegenüber dem Verbrauchsstrom des Schaltkreises vernachlässigbaren Strom für die logischen Schaltsignale erbringen.

Die vorstehend beschriebene Betriebsweise des Selektivrufempfängers bezog sich auf den Auswertezustand, auf den der Selektivrufempfänger auf einen Selektivruf wartet. Will der Teilnehmer jedoch selbst ein Telefongespräch führen, fordert der Sender beim Funkleitrechner einen freien Übertragungskanal an. Anschließend muß der Empfänger auf die vom Funkleitrechner zugewiesene Kanalnummer warten. Da auch während des Wartens auf die Zuweisung eines freien Kanals Daten empfangen werden, die nicht für den Selektivrufempfänger bestimmt sind, läßt sich auch hier eine Stromeinsparung in der vorstehend beschriebenen Weise realisieren. Da die nun erwarteten Daten sich jedoch von einem Selektivruf unterscheiden, wird der Empfänger über ein am Zustandssignaleingang 145 anliegendes Steuersignal in den entsprechenden Auswertezustand versetzt. Auf diese Weise werden die beiden Register 31 und 51 mit anderen Datensätzen geladen. Diese Daten beinhalten bspw. einen anderen Operationscode.

Durch die unterschiedlichen Auswertezustände kann der Selektivrufempfänger stets so an die jeweils erwarteten Daten angepaßt werden, daß ein unnötiger Stromverbrauch im Selektivrufempfänger so weit wie möglich vermieden wird.

Beim Ausführungsbeispiel werden die einzelnen Empfangsbaugruppen derart eingeschaltet, daß sie zu Beginn des auf die Abschaltung folgenden Zeitschlitzes wieder funktionsfähig sind. Dies hat den Zweck, daß die vor dem Beginn des in Fig. 2 dargestellten Datenblocks vorangehenden Rahmen- und Bitsynchronisationssignale empfangen und die im Auswerteteil 14 enthaltenen Oszillatoren nachsynchronisiert werden können. Im praktischen Betrieb hat es sich jedoch herausgestellt, daß diese Oszillatoren so frequenzstabil aufbaubar sind, daß eine Nachsynchronisierung frühestens bei jedem zwanzigsten Zeitschlitz erforderlich ist.

In einer anderen vorteilhaften Ausgestaltung des Ausführungsbeispiels werden als Zeitwortspeicher 231, 232, 233 programmierbare Register mit mindestens jeweils zwei verschiedenen gespeicherten Binärwörtern verwendet. Die Steuereingänge dieser programmierbaren Register, mittels welchen eines von den gespeicherten Binärwörtern ausgewählt und an den Ausgängen der Zeitwortspeicher angelegt wird, sind mit dem Ausgang 146 des Auswerteteils 14 verbunden. Diese Ausgestaltung ist in Fig. 1 durch gestrichelte Verbindungslinien angedeutet. Im Auswerteteil 14 ist zusätzlich ein Zeitschlitzzähler angeordnet, der jeweils bis zwanzig zählt. Bei jedem zwanzigsten Zeitschlitz wird am Ausgang 146 ein Steuersignal abgegeben.

Zusätzlich zu den in den Zeitwortspeichern 231, 232, 233 gespeicherten bereits erwähnten Binärwörtern, welche mit dem Steuersignal ausgelesen werden, sind jeweils Binärwörter gespeichert, welche in den restlichen Zeitschlitzen am Ausgang anstehen. Die Werte dieser Binärwörter sind so gewählt, daß die einzelnen Empfangsbaugruppen nicht zu Beginn des Zeitschlitzes, sondern erst zu Beginn des Datenblocks wieder funktionsfähig sind. Das hat den Vorteil, daß auf diese Weise einfache zusätzlich zu der eingangs beschriebenen Energieeinsparung der Energieverbrauch noch weiter eingeschränkt werden kann.

Figur 3 zeigt ein weiteres schematisiertes Ausführungsbeispiel, wobei für gleiche Baugruppen wie in Figur 1 gleiche Bezugszeichen verwendet wurden. Für eine anschauliche Darstellung wurde auf eine Gliederung des Empfangsteils 1 und des Betriebsspannungsteilers 2, soweit sich deren Funktion gegenüber dem Ausführungsbeispiel in Fig. 1 nicht ändert, verzichtet.

Der Datenausgang des Vergleichsregisters 3 ist mit einem Eingang des Vergleichers 4 und der Datenausgang eines zweiten Vergleichsregisters 301 mit einem Eingang eines zweiten Vergleichers 401 verbunden. Die zweiten Eingänge der Vergleicher 4 und 401 sind untereinander und mit dem Datenausgang 141 des Empfangsteils 1 verbunden. Die Ausgänge der Vergleicher 4 und 401 sind jeweils einem Set-Eingang eines Abschalt-Flip-Flops 241 bzw. 242 zugeführt. Die Reset-Eingänge der Abschalt-Flip-Flops 241 und 242 sind mit dem Synchronisationsimpulsausgang 144 des Empfangsteils 1 verbunden. Die Ausgangssignale der Abschalt-Flip-Flops 241 und 242 werden einem Verknüpfungsglied 25 zugeführt, welches erst wenn alle Eingangssignale anliegen einen Ausgangsimpuls erzeugt. Der Ausgang des Verknüpfungsgliedes ist an die Reset-Eingänge der Betriebsspannungsschalter 211, 212 und 213 verbunden.

Dieses Ausführungsbeispiel bietet den Vorteil, daß der Selektivrufempfänger auf mehrere Datenblöcke, z.B. Einzelruf und Gruppenruf, warten kann. Erst wenn gewährleistet ist, daß keine von den beiden möglichen Meldungen empfangen ist, - beide Vergleicher haben ein Abschaltsignal erzeugt -, wird das kumulierte Abschaltsignal durch das Verknüpfungsglied an die Reset-Eingänge der Betriebsspannungsschalter weitergegeben. Auf diese Weise ist auch bei Betriebszuständen, bei denen verschiedene Datenblöcke zu erwarten sind, eine sichere Auswertung der Datenblöcke gewährt, ohne auf eine Energieeinsparung verzichten zu müssen. Es ist auch bei diesem Ausführungsbeispiel ohne weiteres möglich, eine entsprechende Anzahl von Datenfiltern einzusetzen. In diesem Fall müßten die Ausgänge der Vergleicher 4 und 401 jeweils mit dem Eingang des zugeordneten Datenfilters und die Ausgänge der Datenfilter jeweils mit dem Abschalt-Flip-Flop 241 bzw. 242 verbunden werden.

## Patentansprüche

1. Selektivrufempfänger mit einem Empfangsteil (11, 12, 13) zur Erzeugung von Digitaldaten aus einem empfangenen Signal, mit einem Auswerteteil (14) zur Auswertung der Digitaldaten und einem Vergleicher (4) zum Vergleich der Digitaldaten mit einem vorgegebenen Datenblock, sowie mit einem Versorgungsspannungsverteiler, (2), mit dem wenigstens eine Versorgungsspannung für das Empfangsteil (11, 12, 13) ein- und ausschaltbar ist,
dadurch gekennzeichnet,
daß der Vergleicher (4) auf den Versorgungsspannungsverteiler (2) derart einwirkt, daß bei Nichtübereinstimmung der zu vergleichenden Daten ein Abschaltsignal erzeugt wird.

2. Selektivrufempfänger nach Anspruch 1,
dadurch gekennzeichnet,
daß zwischen den Vergleicher (4) und dem Versorgungsspannungsverteiler (2) ein Datenfilter (6) angeordnet ist.

3. Selektivrufempfänger nach Anspruch 2,
dadurch gekennzeichnet,
daß das Datenfilter (6) mit einem Maskenregister (5) verbunden ist.

4. Selektivrufempfänger nach einem der Ansprüche 1 bis 3,
dadurch gekennzeichnet,
daß der Versorgungsspannungsteiler (2) ein Zeitglied (20) enthält, welches mit dem Ausgang des Vergleichers (4) bzw. mit dem Ausgang des Datenfilters (6) verbunden ist.

5. Selektivrufempfänger nach einem der Ansprüche 1 oder 3,
dadurch gekennzeichnet,
daß das Vergleichsregister (4) bzw. das Maskenregister (5) jeweils mit einem eigenen Zustandsspeicher (41, 51) verbunden sind.

6. Selektivrufempfänger nach einem der Ansprüche 1, 3 oder 5,
dadurch gekennzeichnet,
daß mindestens zwei Vergleicher (4, 401) vorgesehen sind, und zwischen deren Ausgängen und dem Eingang des Versorgungsspannungsverteilers (2) ein Verknüpfungsglied (25) liegt.

7. Selektivrufempfänger nach Anspruch 1 bis ,
dadurch aekennzeichnet,
daß der Vergleicher (4) ein serieller Vergleicher ist, und das Vergleichsregister (3) und das Maskenregister (5) als Schieberregister ausgebildet ist.

8. Selektivrufempfänger nach einem der Ansprüche 1 bis 7,
dadurch gekennzeichnet,
daß ein Zähler (2) vorgesehen ist, dessen Zählerstand mit dem Ausgangswert eines Zeitwortspeichers (231) verglichen wird, und in Abhängigkeit des Vergleichsergebnisses die Betriebsspannung zu einer Baugruppe wieder eingeschaltet wird, wobei der Ausgangswert des Zeitwortspeichers (231) in Abhängigkeit eines Zeitschlitzzählersignals (146) gewählt wird.

9. Selektivrufempfänger nach einem der Ansprüche 1 bis 7,
dadurch gekennzeichnet,
daß der Selektivrufempfänger Teil eines Sendeempfangsgerätes ist.

## Claims

1. A paging receiver having a receiver section (11,12,13) for producing digital data from a received signal, an evaluation section (14) for evaluating the digital data, and a comparator (4) for comparing the digital data with a predetermined data block, and a power supply divider (2) with which at least one power supply to the receiver section (11,12,13) can be switched on and off, characterized in that the comparator (4) influences the power supply divider (2) so that when the data to be compared do not correspond, a time-off signal is generated.

2. A paging receiver as claimed in Claim 1, characterized in that between the comparator (4) and the power supply divider (2) a data filter (6) is inserted.

3. A paging receiver as claimed in Claim 2, characterized in that the data filter (6) is connected to a mask register (5).

4. A paging receiver as claimed in one of the Claims 1 to 3, characterized in that the power supply divider (2) includes a timing means (20) which is connected to the output of the comparator (4) or the output of the data filter (6), respectively.

5. A paging receiver as claimed in one of the Claims 1 or 3, characterized in that the comparing register (4) or the mask register (5) respectively, is connected to its own status memory (41, 51).

6. A paging receiver as claimed in one of the Claims 1, 3 or 5, characterized in that at least two comparators (4, 401) are provided, and between whose outputs and the input of the power supply divider (2) a combining means (25) is arranged.

7. A paging receiver as claimed in Claims 1 to 6, characterized in that the comparator (4) is a serial comparator, and in that the comparing register (3) and the mask register (5) are arranged as shift registers.

8. A paging receiver as claimed in one of the Claims 1 to 7, characterized in that a counter (2) is provided whose count is compared with the initial value of a control word memory (231) and the operating voltage for a sub-set is again switched on in response to the result of the comparison, the initial value of the control word memory (231) being selected in response to a time slot counter signal (146).

9. A paging receiver as claimed on one of the Claims 1 to 7, characterized in that the paging receiver forms part of a transceiver.

## Revendications

1. Récepteur d'appel sélectif comportant une partie réception (11, 12, 13), destinée à produire des données numériques à partir d'un signal reçu, une partie d'exploitation (14) destinée à exploiter les données numériques, et un comparateur (4) destiné à comparer les données numériques à un bloc de données prédéterminé, ainsi qu'un distributeur de la tension d'alimentation (2), à l'aide duquel au moins une tension d'alimentation pour la partie de réception (11, 12, 13) peut être enclenchée et déclenchée, caractérisé en ce que le comparateur (4) agit sur le distributeur de la tension d'alimentation (2) de manière qu'un signal de déclenchement soit produit en cas de non-coïncidence des données à comparer.

2. Récepteur d'appel sélectif selon la revendication 1, caractérisé en ce qu'un filtre à données (6) est disposé entre le comparateur (4) et le distributeur de tension d'alimentation (2).

3. Récepteur d'appel sélectif selon la revendication 2, caractérisé en ce que le filtre à données (6) est relié à un registre des masques (5).

4. Récepteur d'appel sélectif selon l'une quelconque des revendications 1 à 3, caractérisé en ce que le distributeur de tension d'alimentation (2) contient un organe temporisé (20) relié à la sortie du comparateur (4) ou à la sortie du filtre à données (6).

5. Récepteur d'appel sélectif selon l'une quelconque des revendications 1 ou 3, caractérisé en ce que le registre de comparaison (4) et le registre des masques (5), sont chacun reliés à une mémoire d'état (41, 51) propre.

6. Récepteur d'appel sélectif selon l'une quelconque des revendications 1, 3 ou 5, caractérisé en ce qu'au moins deux comparateurs (4, 401) sont prévus et un organe de combinaison (25) est prévu entre leurs sorties et l'entrée du distributeur de tension d'alimentation (2).

7. Récepteur d'appel sélectif selon les revendications 1 à 6, caractérisé en ce que le comparateur (4) est un comparateur série et le registre de comparaison (3) ainsi que le registre des masques (5) sont réalisés sous la forme de registres à décalage.

8. Récepteur d'appel sélectif selon l'une quelconque des revendications 1 à 7, caractérisé en ce qu'un compteur (2) est prévu dont l'état de comptage est comparé à la valeur initiale d'une mémoire de mots de synchronisation (231) et, en fonction du résultat de comparaison, la tension de fonctionnement d'un ensemble est réenclenchée, la valeur initiale de la mémoire de mots de synchronisation (231) étant sélectionnée en fonction d'un signal de compteur de tranches de temps (146).

9. Récepteur d'appel sélectif selon l'une quelconque des revendications 1 à 7, caractérisé en ce que le récepteur d'appel sélectif fait partie d'un appareil émetteur-récepteur.
